Europäisches Patentamt

European Patent Office

Office européen des brevets

(19)

(11) Veröffentlichungsnummer: **0 071 040**
**B1**

(12)

# EUROPÄISCHE PATENTSCHRIFT

(45) Veröffentlichungstag der Patentschrift:
21.05.86

(51) Int. Cl.⁴: **C 01 B 25/41**, C 01 B 25/42,
**B 01 D 1/18**

(21) Anmeldenummer: 82105978.9

(22) Anmeldetag: 05.07.82

(54) Vorrichtung zur Herstellung von Alkalipolyphosphaten aus Alkaliphosphatlösungen oder -suspensionen.

(30) Priorität: 24.07.81 DE 3129180

(43) Veröffentlichungstag der Anmeldung:
09.02.83 Patentblatt 83/6

(45) Bekanntmachung des Hinweises auf die Patenterteilung:
21.05.86 Patentblatt 86/21

(84) Benannte Vertragsstaaten:
AT BE CH DE FR GB IT LI NL SE

(56) Entgegenhaltungen:
CH - A - 95 364
DE - C - 1 667 566
GB - A - 1 204 570

"Ullmanns Encyklopädie der technischen Chemie",
4.Auflage, Band 18, 1979, Seiten 326-327, Verlag
Chemie, Weinheim, DE.

(73) Patentinhaber: HOECHST AKTIENGESELLSCHAFT,
Postfach 80 03 20, D-6230 Frankfurt am Main 80 (DE)

(72) Erfinder: Damman, Ben, Oude Vlissingseweg 63,
Middelburg (NL)
Erfinder: Drijver, Jan, Verdilaan 42, Vlissingen (NL)
Erfinder: Kinneging, Hans, Korendijk 38, Middelburg (NL)
Erfinder: Scheffer, Hans, Multatulilaan 2, Vlissingen (NL)
Erfinder: Stam, Jaap, Francklaan 1, Vlissingen (NL)
Erfinder: de Witte, Paul, Beatrixstraat 41, Westkapelle
(NL)

## Beschreibung

Die vorliegende Erfindung betrifft eine Vorrichtung zur Herstellung von Alkalipolyphosphaten aus Alkaliphosphatlösungen oder -suspensionen, welche aus einem vertikal angeordneten, mit einem Deckel verschlossenen, zylindrischen und unten spitz zulaufenden Sprühturm besteht, wobei der Deckel mittig von einem mit einer Versprüheinrichtung verbundenen Lösungszuführungsrohr sowie weiterhin von mehreren, konzentrisch um das Lösungszuführungsrohr angeordneten Brennern durchdrungen ist.

Es ist bekannt, Alkalipolyphosphate durch Versprühen von wäßrigen Alkaliphosphatlösungen, welche auf das entsprechende Alkalioxid-$P_2O_5$-Verhältnis eingestellt sind, in einem zylindrischen Sprühturm zu erhalten. Dabei wird der Deckel des Sprühturmes zentrisch von einem Zuführungsrohr für die Alkaliphosphatlösung durchdrungen, welches in einer Mehrstoffdüse endet. Auf einer zum Zuführungsrohr konzentrischen Kreislinie wird der Deckel von mehreren, mit Abstand voneinander angeordneten Brennern durchdrungen, wobei die zerstäubte Alkaliphosphatlösung beim Passieren der vom Brennerkranz erzeugten Flammzone zunächst eingedampft und anschließend die Phosphate kondensiert werden. Als Treibgas für die Versprühung werden Druckluft oder Wasserdampf mit Drucken bis zu 12 bar angewendet (vergl. "Ullmanns Encyklopädie der technischen Chemie" 4. Auflage, Band 18, Seiten 328 und 327; DE-C-1 667 566).

Um den störungsfreien Betrieb des Sprühturmes sicherzustellen, ist es erforderlich, so konstruierte Mehrstoffdüsen zu verwenden, bei welchen bei thermischer Belastung eine relative Verschiebung der verschiedenen Spaltringe zueinander und die damit einhergehende Veränderung der Ringspalte vermieden wird (vergl. DE-C-2 121 066).

Nachteilig ist bei dieser Vorrichtung, daß ihr Betreiben wegen der Verwendung von hochgespannten Gasen zum Versprühen der Phosphatlösung energieintensiv ist. Darüberhinaus enthält sie kompliziert konstruierte und damit teure Mehrstoffdüsen.

Schließlich ist aus der CH-A-95 364 eine Einrichtung zum Eintrocknen von Feststoffe in Lösung oder Suspension enthaltenden Flüssigkeiten bekannt, welche aus einer Trockenkammer mit Zuführungskanal für überhitzten Dampf und einem Abzugskanal für Sattdampf strömungsmäßig verbunden ist. In die Trockenkammer ragt ein Speiserohr hinein, welches an seinem einen Ende einen Düsenzerstäuber mit mehreren Einstoffdüsen trägt, während sein anderes Ende mit einer Druckpumpe verbunden ist, deren Saugrohr in den Lösungs- oder Suspensionsbehälter eintaucht. Nahe dem Boden der Trockenkammer ist eine Förderschnecke angeordnet, durch welche der erzeugte Feststoff aus der Trockenkammer ausgetragen wird.

Nachteilig ist bei dieser Vorrichtung, daß das Speiserohr nur einen mit Einstoffdüsen versehenen Sprühkopf trägt.

Es ist daher Aufgabe der vorliegenden Erfindung, eine Vorrichtung zur Herstellung von Alkalipolyphosphaten anzugeben, welche aus einem mit einem Deckel verschlossenen Sprühturm besteht, wobei der Deckel mittig von einem mit einer Versprüheinrichtung verbundenen Lösungszuführungsrohr durchdrungen ist und bei welcher auf energieintensive Sprühmittel sowie konstruktiv aufwendige Mehrstoffdüsen zum Versprühen der Lösungen verzichtet werden kann. Das wird erfindungsgemäß dadurch erreicht, daß die Versprüheinrichtung aus einem Speiserohr mit mehreren Sprühköpfen besteht, in deren Stirnflächen jeweils mehrere Einstoffdüsen mit Bohrungen von 0,5 bis 5 mm eingelassen sind, wobei die Stirnfläche des Sprühkopfes nach unten gerichtet ist, während die Stirnflächen der übrigen, oberhalb des Sprühkopfes angeordneten Sprühköpfe schräg auf die Innenwand des Sprühturmes gerichtet sind und daß sich im Lösungszuführungsrohr mindestens eine Druckerhöhungspumpe befindet.

Die Vorrichtung gemäß der Erfindung kann weiterhin wahlweise auch noch dadurch weitergebildet sein, daß

a) die übrigen Sprühköpfe über Rohre mit dem Speiserohr strömungsmäßig verbunden sind,

b) die Stirnflächen der Sprühköpfe eben ausgebildet sind,

c) die Stirnflächen der Sprühköpfe im Querschnitt stufenförmig ausgebildet sind,

d) in das Zentrum der Stirnfläche jedes Sprühkopfes eine Einstoffdüse eingelassen ist, während auf mindestens einer zum Zentrum konzentrischen Kreislinie weitere Einstoffdüsen angeordnet sind.

Durch die Anordnung mehrerer Sprühköpfe am Speiserohr der Versprüheinrichtung gemäß der erfindungsgemäßen Vorrichtung wird erreicht, daß die Wärmekapazität der aus den nach unten gerichteten Brennern austretenden Flammen besser zur Trocknung und Kondensation ausgenutzt wird.

Bei der Vorrichtung gemäß der Erfindung können in die Sprühköpfe Zentral- oder Zentrifugal-Einstoffdüsen eingesetzt werden.

Mit der erfindungsgemäßen Vorrichtung hergestellte Alkalipolyphosphate haben im Vergleich zu mit Vorrichtungen den nach dem Stand der Technik gewonnenen Produkten ein engeres Körnungsband, wodurch der Polyphosphat-Gehalt um etwa 1 % erhöht wird. Darüberhinaus ist dadurch beim Tripolyphosphat das Verhältnis von Phase I zu Phase II schärfer einstellbar. Ferner entstehen weniger Agglomerate, wodurch das Produkt abriebfester ist.

Bei mit der Vorrichtung gemäß der Erfindung hergestellten Alkalipolyphosphaten ist die Teilchengröße und das Körnungsspektrum des Produktes durch die Änderung des Sprühdruckes beeinflußbar.

Mit der erfindungsgemäßen Vorrichtung kann Agglomeration, welche zu Produkten mit besonders niedrigam Schüttgewicht führt, durch Überlagerung der Sprühkegel der verschiedenen Düsen eines Sprühkopfes erzeugt werden. Dabei haben die Geometrie der Überlagerung und der Abstand zur Flammzone Einfluß auf den Grad und die Form der Agglomeration.

In der beigefügten Zeichnung ist eine Vorrichtung zur Herstellung von Alkalipolyphosphaten aus Alkaliphosphatlösungen oder -suspensionen schematisch und teilweise im Schnitt dargestellt. Dabei zeigen:

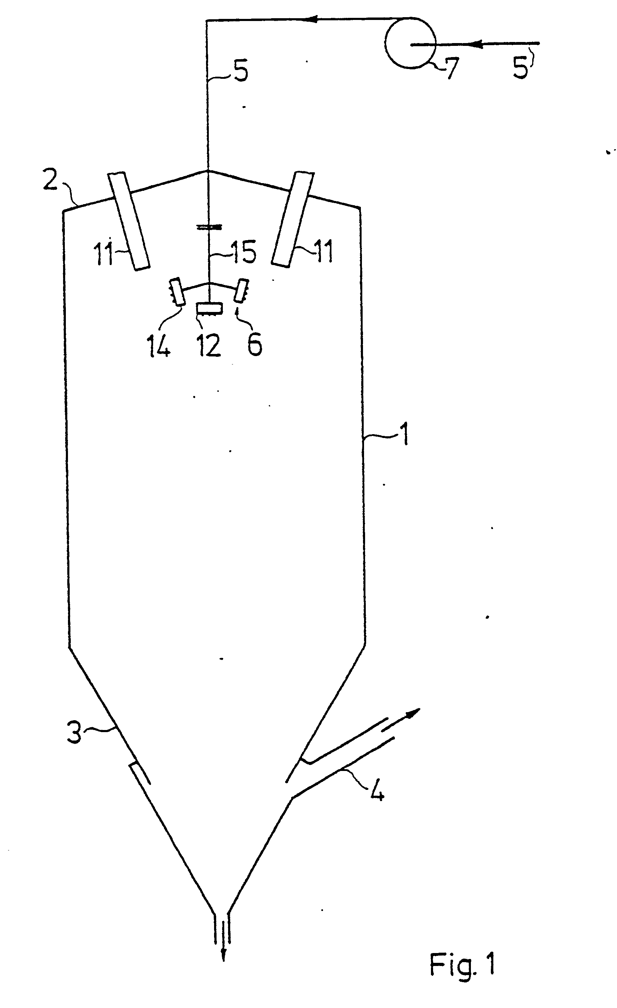

Figur 1 eine Seitenansicht eines Sprühturmes,

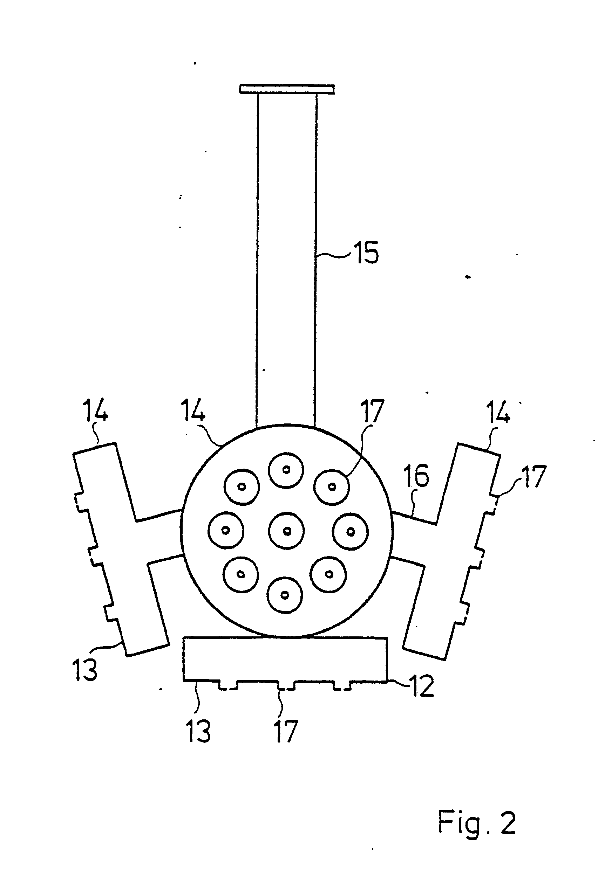

Figur 2 eine Seitenansicht einer Versprüheinrichtung,

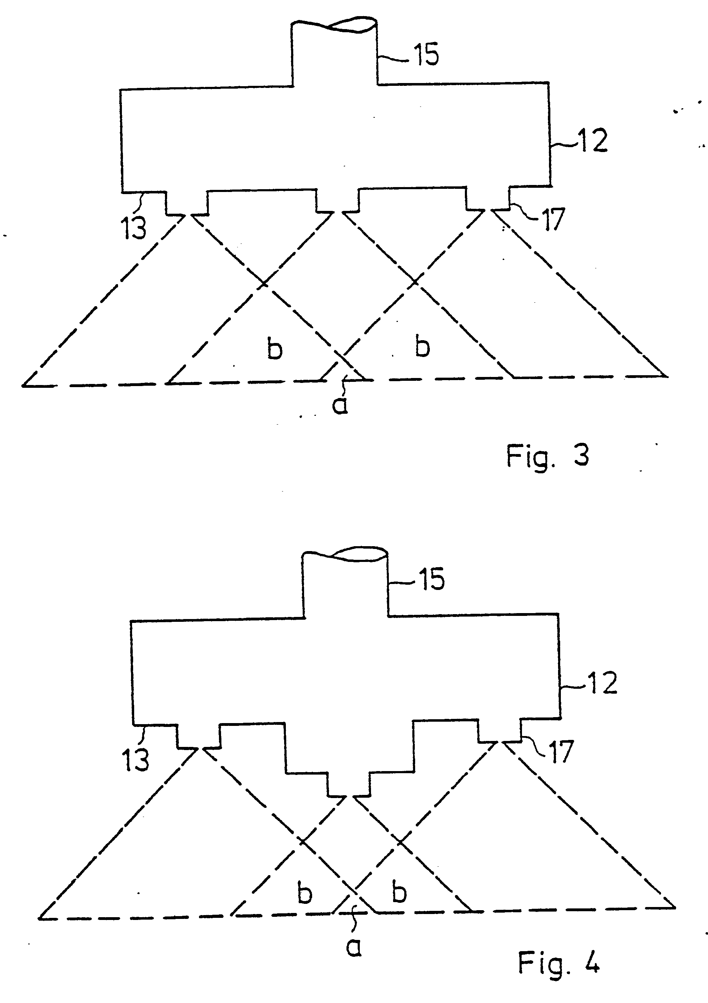

Figuren 3 und 4 Seitenansichten von Sprühköpfen mit verschieden gestalteten Stirnflächen.

Ein zylindrischer Sprühturm 1 ist mit einem konischen Deckel 2 verschlossen und mit einem spitz zulaufenden Unterteil 3 versehen, wobei vom Unterteil 3 eine Abgasleitung 4 abgeht. Der konische Deckel 2 ist zentrisch von einem Lösungszuführungsrohr 5 durchdrungen, an dessen Ende im Inneren des Sprühturmes 1 eine Versprüheinrichtung 6 angeordnet ist, während sich im Lösungszuführungsrohr 5 außerhalb des Sprühturmes 1 mindestens eine Druckerhöhungspumpe 7 befindet. Auf einer konzentrisch zum Lösungszuführungsrohr 5 verlaufenden Kreislinie sind mehrere Brenner 11 angeordnet, welche den konischen Deckel 2 durchdringen und schräg in den Sprühturm 1 hineinragen.

Die Versprüheinrichtung 6 besteht aus einem Speiserohr 15, welches mit dem Lösungszuführungsrohr 5 strömungsmäßig verbunden ist, und an dessen entgegengesetzten Ende ein Sprühkopf 12 mit nach unten weisender Stirnfläche 13 angeordnet ist, während sich oberhalb des Sprühkopfes 12 weitere Sprühköpfe 14 mit schräg nach unten auf die Innenwand des Sprühturmes 1 gerichteten Stirnflächen 13 befinden, welche über Rohre 16 mit dem Speiserohr 15 verbunden sind. In die Stirnflächen 13 der Sprühköpfe (12, 14) sind mehrere Einstoffdüsen 17 eingelassen.

Die Stirnfläche 13 jedes Sprühkopfes (12, 14) kann eben oder im Querschnitt treppenförmig gestaltet sein. Dadurch wird Einfluß auf die Intensität der Durchdringung der Sprühkegel der verschiedenen Düsen 17 genommen (Bereich a: Gegenseitige Durchdringung dreier Sprühkegel; Bereich b: Gegenseitige Durchdringung zweier Sprühkegel).

In den folgenden Beispielen werden bei dem Kornspektrum die prozentualen Rückstände angegeben, welche auf einem Prüfsieb mit den genannten lichten Maschenweiten in mm (nach DIN 1171) zurückbleiben.

**Beispiel 1** (nach dem Stand der Technik) In einem Sprühturm von etwa 15 m Höhe und 7 m Durchmesser sowie mit einer Mehrstoffdüse nach der DE-C-2 121 066 als Versprüheinrichtung wird Wasserdampf als Sprühmittel verwendet, wobei der Innenraum der Düse mit 12 bar, entsprechend 2,5 t Dampf/h, und ihr Außenraum mit 5 bar, entsprechend 1,5 t Dampf/h, beaufschlagt wurden. Durch den mittleren Düsenspalt von ca. 0,9 mm Breite wurden 12 m$^3$/h, entsprechend 18 t/h, Natriumorthophosphatlösung mit einem $Na_2O$ : $P_2O$ - Verhältnis von 5:3 unter einem Druck von 3,5 atü versprüht. Es resultierten 8,3 t/h Natriumtripolyphosphat mit einem $Na_5P_3O_{10}$ - Gehalt von 97 % und einem Schüttgewicht von 720 g/l. Das Natriumtripolyphosphat wies folgendes Kornspektrum auf:

0,750 mm 1 %
0,150 mm 65 %
0,075 mm 92,5 %

Ein unter Verwendung von Harnstoff als Blähmittel und unter sonst gleichen Bedingungen hergestelltes Natriumtripolyphosphat hatte ein Schüttgewicht von 470 g/l und wies folgendes Kornspektrum auf:

0,750 mm 22,2 %
0,150 mm 85,9 %
0,075 mm 92,4 %

**Beispiel 2** (gemäß der Erfindung)

Im Sprühturm nach Beispiel 1 befand sich als Versprüheinrichtung ein Speiserohr, welches mit 6 Sprühköpfen strömungsmäßig verbunden war, wobei in jeden Sprühkopf 7 Einstoffdüsen eingelassen sind und jede Düse eine Bohrung von 3 mm aufwies. Durch die insgesamt 42 Düsen wurden 8,5 m$^3$/h, entsprechend 13,2 t/h, Natriumorthophosphatlösung mit einem $Na_2O$ : $P_2O_5$ - Verhältnis von 5: 3 unter einem Druck von 15 bar versprüht. Es resultierten 6,8 t/h Natriumtripolyphosphat mit einem $Na_5P_3O_{10}$ - Gehalt von 97,5 % und einem Schüttgewicht von 700 g/l. Das Natriumtripolyphosphat wies folgendes Kornspektrum auf:

0,750 mm 2,5 %
0,150 mm 82,0 %
0,075 mm 96,3 %

**Beispiel 3** (gemäß der Erfindung)

Im Sprühturm nach Beispiel 1 befand sich als Versprüheinrichtung ein Speiserohr, welches mit 10 Sprühköpfen strömungsmäßig verbunden war, wobei in jeden Sprühkopf 7 Einstoffdüsen eingelassen sind und jede Düse eine Bohrung von 2 mm aufwies. Durch die insgesamt 70 Düsen wurden 13 m$^3$/h, entsprechend 20,1 t/h, Natriumorthophosphatlösung mit einem $Na_2O$ : $P_2O_5$-Ver-hältnis von 5: 3 unter einem Druck von 28 bar versprüht. Es resultierten 10,4 t/h Natriumtripolyphosphat mit einem $Na_5P_3O_{10}$- Gehalt von 98,0 % und einem Schüttgewicht von 720 g/l. Das Natriumtripolyphosphat wies folgendes Kornspektrum auf:

0,750 mm 0,2 %
0,150 mm 71,6 %

0,075 mm 94,0 %

**Beispiel 4** (gemäß der Erfindung)

Im Sprühturm nach Beispiel 1 mit einer Versprüheinrichtung gemäß Beispiel 3 wurden 8 m³/h, entsprechend 12,5 t/h, Natriumorthophosphatlösung mit einem Na₂O: P₂O₅-Verhältnis von 5:3, welcher je m³ 6 kg Harnstoff als Blähmittel zugesetzt waren, unter einem Druck von 9 bar versprüht. Es resultierten 6,4 t/h hohlkugelförmiges Natriumtripolyphosphat mit einem Na₅P₃O₁₀-Gehalt von 96,5 % und einem Schüttgewicht von 430 g/l. Das Natriumtripolyphosphat wies folgendes Kornspektrum auf:

    0,750 mm 0,5 %
    0,150 mm 91,1 %
    0,075 mm 98,0 %

**Beispiel 5** (nach dem Stand der Technik)

Im Sprühturm mit Mehrstoffdüse als Versprüheinrichtung nach Beispiel 1 wurden 12 m³/h, entsprechend 17,8 t/h, Natriumorthophosphatlösung mit einem Na₂O : P₂O₅ -Verhältnis von 2: 1 unter einem Druck von 3,5 bar versprüht. Es resultierten 8,4 t/h Tetranatriumpyrophosphat mit einem Na₄P₂O₇-Gehalt von 96 % und einem Schüttgewicht von 650 g/l. Das Tetranatriumpyrophosphat wies folgendes Kornspektrum auf:

    0,750 mm 1 %
    0,150 mm 43,4 %
    0,075 mm 77,2 %

**Beispiel 6** (gemäß der Erfindung)

Im Sprühturm nach Beispiel 1 befand sich als Versprüheinrichtung ein Speiserohr, welches mit 4 Sprühköpfen strömungsmäßig verbunden war, wobei in jedem Sprühkopf 8 Einstoffdüsen eingelassen sind und jede Düse eine Bohrung von 3,4 mm aufwies. Durch die insgesamt 32 Düsen wurden 12 m³/h, entsprechend 17,7 t/h, Natriumorthophosphatlösung mit einem Na₂O : P₂O₅-Verhältnis von 2: 1 unter einem Druck von 15 bar versprüht. Es resultierten 8,4 t/h Tetranatriumpyrophosphat mit einem Na₄P₂O₇-Gehalt von 96 % und einem Schüttgewicht von 620 g/l. Das Tetranatriumpyrophosphat wies folgendes Kornspektrum auf:

    0,750 mm 0,2 %
    0,150 mm 60,1 %
    0,075 mm 85,1 %

**Patentansprüche**

1. Vorrichtung zur Herstellung von Alkalipolyphosphaten aus Alkaliphosphatlösungen oder -suspensionen, bestehend aus einem vertikal angeordneten, mit einem Deckel verschlossenen, zylindrischen und unten spitz zulaufenden Sprühturm, wobei der Deckel mittig von einem mit einer Versprüheinrichtung verbundenen Lösungszuführungsrohr sowie weiterhin von mehreren, Konzentrisch um das Lösungszuführungsrohr angeordneten Brennern durchdrungen ist dadurch gekennzeichnet, daß die Versprüheinrichtung (6) aus einem Speiserohr (15) mit mehreren Sprühköpfen (12, 14) besteht, in deren Stirnflächen (13) jeweils mehrere Einstoffdüsen (17) mit Bohrungen von 0,5 bis 5 mm eingelassen sind, wobei die Stirnfläche (13) des Sprühkopfes (12) nach unten gerichtet ist, während die Stirnflächen (13) der übrigen, oberhalb des Sprühkopfes (12) angeordneten Sprühköpfe (14) schräg auf die Innenwand des Sprühturmes (1) gerichtet sind und daß sich im Lösungszuführungsrohr (5) mindestens eine Druckerhöhungspumpe (7) befindet.

2. Vorrichtung nach Anspruch 1, dadurch gekennzeichnet, daß die übrigen Sprühköpfe (14) über Rohre (16) mit dem Speiserohr (15) strömungsmäßig verbunden ist.

3. Vorrichtung nach Anspruch 1 oder 2, dadurch gekennzeichnet, daß die Stirnflächen (13) der Sprühköpfe (12, 14) eben ausgebildet sind.

4. Vorrichtung nach Anspruch 1 oder 2, dadurch gekennzeichnet, daß die Stirnflächen (13) der Sprühköpfe (12, 14) im Querschnitt stufenförmig ausgebildet sind. 5. Vorrichtung nach einem der Ansprüche 1 bis 4, dadurch gekennzeichnet, daß in das Zentrum der Stirnfläche (13) jedes Sprühkopfes (12, 14) eine Einstoffdüse (17) eingelassen ist, während auf mindestens einer zum Zentrum konzentrischen Kreislinie weitere Einstoffdüsen (17) angeordnet sind.

**Claims**

1) Device for making alkali metal phosphates from alkali metal phosphate solutions or suspansions wherein a cylindrical spray tower having a tapered lower end and being closed by means of a cover has a solvent feed pipe terminating in a spray means centrally passed through its cover, and a plurality of burners is passed through the cover, concentrically around the solvent feed pipe, characterized in that the spray means (6) is comprised of a feed pipe (15) provided with several spray heads (12, 14) having a plurality of single medium nozzle structures (17) with bores 0.5 to 5 mm wide disposed in their terminal surface areas (13), the terminal surface area (13) of the spray head (12) being directed towards the bottom, whilst the terminal surface areas (13) of all other additional spray heads (14) arranged above the spray head (12) are inclined with respect to the inside wall of the spray tower (1), and in that at least one pressure-increasing pump (7) is disposed in the solvent feed pipe (5).

2) Device as claimed in claim 1, wherein the additional spray heads (14) are connected in the direction of flow to the feed pipe (15) by means of pipes (16).

3) Device as claimed in claim 1 or 2, wherein the spray heads (12, 14) have even terminal surface areas (13).

4) Device as claimed in claim 1 or 2, wherein the terminal surface areas (13) of the spray heads (12, 14) have a staged cross-sectional area.

5) Device as claimed in any of claims 1 to 4, wherein each spray head (12, 14) has a single medium nozzle structure (17) installed in the center of its terminal surface area, additional single medium nozzle structures (17) being arranged along at least one circular line concentric to the center.

## Revendications

1. Appareillage pour la préparation de polyphosphates alcalins à partir de solutions ou de suspensions de phosphates alcalins, constitué par une tour d'atomisation cylindrique à extrémité inférieure conique, disposée en position verticale et fermée par un couvercle, ce dernier étant traversé en son centre par un tube d'amenée de solution relié à un dispositif de projection ainsi que par plusieurs brûleurs agencés concentriquement autour du tube d'amenée de solution, caractérisé en ce que le dispositif de projection (6) est constitue par un tube d'amenée (15) à plusieurs têtes de projection (12, 14), dans les surfaces frontales desquelles on a à chaque fois disposé plusieurs buses de projection à un seul composant (17) présentant des alésages de 0,5 à 5 mm, la surface frontale (13) de la tête de projection (12) étant dirigée vers le bas, tandis que les surfaces frontales (13) des autres têtes de projection (14) agencées au-dessus de la tête de projection (12) sont inclinées sur la paroi intérieure de la tour d'atomisation (1), et en ce qu'au moins une pompe (7) permettant d'accroître la pression est disposée sur le tube d'amenée de solution (5).

2. Appareillage selon la revendication 1, caractérisé en ce que les autres têtes de projection (14) sont reliées dans le sens d'écoulement au tube d'amenée (15) par l'intermédiaire de tuyaux (16).

3. Appareillage selon la revendication 1 ou 2, caractérisé en ce que les surfaces frontales (13) des têtes de projection (12, 14) sont planes.

4. Appareillage selon la revendication 1 ou 2, caractérisé en ce que les surfaces frontales (13) des têtes de projection (12, 14) présentent une section transversale étagée.

5. Appareillage selon l'une des revendications 1 à 4, caractérisé en ce qu'une buse à un seul composant (17) est installée au centre des surfaces frontales (13) de chacune des têtes de projection (12, 14), tandis que des buses (17) à un seul composant supplémentaires sont agencées sur une ligne circulaire concentrique par rapport au centre.

Fig. 1

Fig. 2

Fig. 3

Fig. 4